# EUROPEAN PATENT APPLICATION

(11) **EP 1 239 645 A2**
(43) Date of publication of application: **11.09.2002**
(21) Application number: 02251647.0
(22) Date of filing: 08.03.2002
(51) Int. Cl.: H04L 29/06, H04L 12/14

(54) **Internet services**

(30) Priority: 09.03.2001 GB 0105823; 06.11.2001 GB 0126699
(71) Applicant: Samal Systems Limited, Witham, Essex CM8 1AH (GB)
(72) Inventor: Hopkins, Samuel Angus, Willingham, Cambridgeshire CB4 5LD (GB)
(74) Representative: Gillam, Francis Cyril

(57) **Abstract**

A method of controlling access to an Internet based controlled service, provided on a content server includes the step of using a CLI-enabled telephone having an account with a telephone network service provider, to call a specified destination at which a responder to the call retrieves the calling number and passes that number to a matching server. The call may be either a voice call or a text message, made with a mobile (cellular) telephone. The Internet site on the content server is accessed using an Internet terminal and the telephone number of the CLI-enabled telephone is submitted to the content server, for forwarding to the matching server. The matching server compares the numbers passed to it by the responder with the numbers passed to it by the content server and if a match is found, then the content server allows access to the Internet based service. A suitable charge may be collected through the telephone account of the CLI-enabled telephone by making an elevated charge for the originating call to the specified destination.

## Description

This invention concerns the provision of controlled services on the Internet. More specifically, the invention relates to methods of authorising access to an Internet-based controlled service, and methods of effecting payment for such services. These methods utilise a novel process involving the use of telephony as a step in an authorising chain for the provision of the controlled services on the Internet. Also, the invention concerns apparatus for an authorising procedure for accessing a controlled Internet-based service.

This invention may be performed using a mobile (cellular) telephone or a telephone connected to a land-line and with an account with a telephone network service provider which has caller-line identification ("CLI") enabled. Consequently, all references herein to a "telephone" should be understood to extend either to a telephone having a permanent (or essentially permanent) land-line connection to a telephone network service provider or to a cellular mobile telephone registered with a cellular network service provider. Further, in the case of a land-line, it is strictly the line that has a unique telephone number associated therewith and not the telephone connected to that land-line. In the following reference will solely be made to a "telephone number", irrespective of whether that number is associated with a line provided by a network service provider, or with a SIM card plugged into a mobile telephone.

Though the Internet is being used on an ever-increasing scale for the purchase of goods or services, much of the information available on the Internet is provided without any charge being made for that information. Instead, most Internet content providers have to rely on advertising revenue, to pay for running their Internet sites, often including the provision of valuable information. Sometimes, valuable information is provided as an adjunct of some other service, in which case the cost of providing that information on the Internet may at least partially be paid for by the other service. The amount of revenue available from advertising is limited and many Internet content providers are having great difficulty in generating sufficient revenue to pay for the cost of the provision of the content on various web sites.

The great majority of commercial transactions effected through Internet sites is undertaken using credit cards. Credit card companies make a charge to a vendor each time a card is used to purchase goods or services and though the charge normally is based on a percentage of the transaction value, there is usually a minimum charge made by the credit card company. Thus, for low-value transactions, the cost of using a credit card becomes prohibitive, for it could easily exceed the value of the transaction. Moreover, credit card companies greatly resist any attempt to reduce the minimum charge for using a credit card, since the service provided by a credit card company each time a card is used has associated with it a tangible cost which the credit card company wishes to recover from the transaction effected.

In an attempt to address the problem of making a relatively small charge for the provision of a low-value service through an Internet site, not infrequently a significantly higher charge is made and is paid for using a credit card, the Internet content provider then allowing a user access to the low-value information several times, for the single charge. The disadvantage of this is that a user may be put off using the service for a significantly higher up-front payment and that the content provider has to maintain a log of the number of accesses by each user. Despite that, this system can work successfully if a user knows that he will wish to access similar information on an on-going basis spread over a period of time, from the same content provider. The difficulty still remains where a user might want just a single access to information, and to make a relatively low payment for that.

The present invention aims at addressing the above problem, by using a new authorising procedure to permit access to relatively low-value but nevertheless commercially worthwhile information provided through an Internet site, by using a telephone which identifies to the network service provider the telephone number of the calling telephone - i.e. the telephone is CLI-enabled.

According to one aspect of the present invention, there is provided an authorising procedure for accessing an Internet-based controlled service, which procedure comprises:
- using a CLI-enabled telephone having an account with a telephone network service provider, to call a specified destination at which a responder to said call retrieves the calling number and passes that calling number to a matching server;
- recording on the matching server each calling number passed thereto by the responder;
- accessing an Internet site provided on a content server and which offers said Internet-based controlled service;
- submitting to the content server the telephone number of the CLI-enabled telephone used to make said call to the specified destination;
- forwarding the submitted telephone number to the matching server for comparison with all calling numbers recorded on the matching server; and
- allowing or refusing access to the Internet-based service depending upon the result of the comparison.

In a closely related authorising procedure, the steps described above are performed in a different order. Thus, the invention also provides an authorising procedure for accessing an Internet-based controlled service, which procedure comprises:
- accessing an Internet site provided on a content server and which offers said Internet-based controlled service;
- submitting to the content server the telephone number of a CLI-enabled telephone having an account with a telephone network service provider which will be used to make a call to a specified destination at which a responder to said call retrieves the calling number;
- forwarding the submitted telephone number to a matching server;
- obtaining from the content server instructions for making said call to the specified destination;
- using the CLI-enabled telephone to call the specified destination in accordance with the obtained instructions;
- passing the telephone number retrieved by the responder to the matching server;
- using the matching server to compare recorded submitted telephone numbers with telephone numbers passed thereto by the responder; and
- allowing or refusing access to the Internet-based service depending upon the result of the comparison.

Either authorising procedure described above may significantly be enhanced by providing the content server with a list of those telephone numbers which may, or may not, be authorised to access the controlled service. In such a case, access to the controlled service will be refused if the submitted telephone number is not on the list, irrespective of the comparison to be performed by the matching server. The two tests for authorisation may be performed simultaneously or exclusively; the former would be faster to perform and access would be refused if either test fails to produce a positive result.

It will be appreciated that with an authorisation procedure of the present invention, access to content on the Internet can be controlled in such a way that it becomes possible to collect a low-value payment for that content.
Thus, in a preferred method of this invention adapted to facilitate payment for access to Internet content, said call is made to a specified premium rate destination for which an elevated charge is made; and the telephone network service provider debits the account with a pre-set elevated charge either on connecting the call or on completion of a subsequent step in the authorising procedure.

Yet another aspect of this invention provides apparatus for authorising access to an Internet-based service, comprising a computer installation running a premium rate service arranged to receive calls and make an elevated charge to an account holder for a calling telephone. A matching server is arranged to receive from said computer installation the telephone number of the calling telephone to the premium rate service, the matching server storing that telephone number in a database. The apparatus further includes an Internet service content server to which access may be gained through the Internet and limiting access to data available from the server, the content server prompting for the entry of a telephone number and then passing an entered telephone number to the matching server for comparison with the telephone numbers stored in the matching server database. Thereafter the matching server notifies the content server of the result of the comparison and the content server permits or denies access to said data dependent thereon.

The authorisation procedure may be operated with text messages, using for example the SMS (short messaging service) implemented by most cellular telephone network service providers, though possibly in conjunction with a messaging facilitator. In this case an originating text message may be sent by means of a mobile telephone, the messaging service passing the originating text message to the responder which retrieves the calling number associated with the text message and passes the calling number to the matching server. The responder then will generate and forward to the messaging service a return text message for onward transmission to the mobile telephone. A charge for the Internet-based service may be collected by making an elevated charge either for transmitting the text message to the responder, or for returning the responder's text message to the original caller's mobile telephone.

In an alternative authorising procedure, the CLI-enabled telephone (either a land-line telephone or a cellular telephone) may be used to make a voice call to the specified destination, the responder at the specified destination retrieving the calling number and then producing a voice message to indicate the calling number has been passed to the matching server for recording thereat. In this case, the voice call may be to a premium rate number, which then allows an elevated charge to be made by the telephone network service provider, that provider then sharing that elevated charge with the Internet content service provider.

The matching server is provided with the telephone number of the telephone which originated the voice call or text message, while the content provider monitors for the site being accessed by a user who is able to enter, as a kind of password, the telephone number of the telephone which originated that call or message. If a match is found, then that user is given access to the information provided on the Internet site, but if no match between the telephone number entered as a kind of password and the telephone number originating the voice call or text message is found, then access to the service is denied.

Where an elevated charge is made for calling a premium rate number, the authorisation procedure may be selected from one of a number of different regimes, the dialling prefix to the actual number to be called depending upon the chosen regime. The actual number would be exclusive to the matching server, whereby the call is directly routed to that server.

For example, a so-called "drop charge" premium rate service call could be employed where a call to the service prefix immediately incurs a fixed charge (e.g. £1.00) and 1 minute of connection time, whereafter the call is disconnected. Alternatively, the call could be time-dependent (e.g. £1.00 per minute or part thereof of connection) where the required payment for the Internet content is equal to the first minute charge for the connection.

In the case of a text message approach, the matching server may forward the return message to the messaging service immediately upon receiving the originating message. This could have the disadvantage that if a user does not immediately attempt to access the Internet-based service, a charge could be made for a service which was not in fact taken during a defined accounting period. Moreover, it is possible a record could be lost, so access would be denied when in fact a charge had been made. An alternative procedure may therefore be for the matching server to forward the return message to the messaging service only once the comparison of numbers occurs and a positive match is found, following a user accessing the Internet-based site, to use the service. The return message would then be sent to the matched number, with the certainty that the service was being used.

The technique of this invention as described above can wholly eliminate the use of credit card transactions, especially for relatively low-value transactions. Rather, a charge will appear on the telephone account associated with the premium rate call or text message and would be paid for in the usual way, to the telephone network service provider. It is a relatively easy accounting matter for the telephone network service provider to analyse out of the bills it renders what proportion of the sums charged for premium rate calls or text messages are payable to an Internet content service provider, on the basis of the called telephone numbers. In this way, the Internet service provider may be reimbursed for providing information through an Internet site, especially if that information is of relatively low-value, but without using a credit card in the conventional way.

The broad principle behind the present invention may be implemented in one of several different ways. For example, in the case of voice messages to a premium rate number, the matching server may play a pre-recorded message back to the premium rate caller, indicating the charge has been made and the number recorded, so that the caller may then disconnect the call and access the Internet-based service. Alternatively, the message could indicate the charge would be made in a fixed number of seconds, so giving the caller the opportunity to disconnect the call without being charged.

The method may be arranged to permit the calling telephone number to be re-submitted to the Internet site every time access is required, and so every time a comparison is to be made with the numbers stored by the matching server. This procedure has the advantage that no personal details of the user are made available to the Internet content provider, other than the caller's telephone number. In an alternative procedure, the telephone number of the telephone may be recorded in a user profile stored on a content server associated with the Internet site such that the user merely logs in to the Internet site and the content server reads the telephone number of the telephone and forwards that to the matching server, for comparison purposes. This allows a user to set up an account on a content server for the Internet-based service, and then merely to log into that account by entering a user name and password.

The methods of this invention as described above may be given additional security in use by requiring the user, when making the call, to enter a password, using the telephone key-pad, which password is known only to that user. Such a password could be wholly numeric (i.e. a PIN), to facilitate use of a telephone key-pad, or alpha-numeric. The matching server would then record the password in association with the recorded telephone number. On accessing the Internet site, the user submits to the content server both the calling telephone number and the password - the site must be configured to permit this entry of two fields of data. The content server then forwards both the calling telephone number and the password to the matching server for comparison with the database of numbers and passwords, recorded from the incoming calls.

In the foregoing, it has mostly been presumed that the originating call or text message will be made prior to the telephone number (at least) of the telephone used to make the call being submitted to the content server. However, it is possible for a user to gain access to the Internet site and note the instructions for accessing the controlled service from that site, either before or after entering the telephone number of the CLI-enabled telephone which will be used to make the call or the originating text message, shortly thereafter. The content server could be configured to permit the user to move forward in the site only after indicating that the call has been made or text message sent. The content server forwards the calling telephone number to the matching server. In the alternative, the content server could immediately send the calling telephone number to the matching server to await receipt of the telephone number taken from the call or text message, the Internet site holding the user at some pre-determined point until the matching server indicates a match has been achieved between a telephone number submitted to the Internet site and the telephone number used for making the call.

Generally, the authorising procedure will permit a single access to the Internet content for which a payment is required. For such a case, the matching server will delete from its database of recorded calling telephone numbers the telephone number with which a match has been achieved on performing a comparison. However, if the authorising procedure permits a plurality of accesses, then the matching server will associate with a recorded telephone number a count which is set to some pre-determined value upon recording a telephone number and which is then decremented each time a match is achieved. Upon the count reaching zero, then the recorded telephone number will be deleted from the database.

It will be appreciated that the method of the present invention may be used with pre-paid account mobile telephones, or credit account mobile or land-line telephones. In the former case, a pre-set number of units would be deducted from the pre-paid account upon a user making a premium rate call or sending the text message, whereas in the latter a pre-set charge is made to the credit account of the telephone.

The method of this invention may be performed using an Internet terminal in conjunction with a mobile or a land-line telephone, the Internet terminal comprising one of a personal computer, an Internet-enabled digital television receiver or an Internet-enabled personal games console. Alternatively, the entire procedure may be performed through a mobile telephone which is used both to access the Internet site and to make the required premium rate calls. Thus, a WAP (wireless application protocol) mobile telephone or an I-mode mobile telephone may be used for both purposes.

Though it is envisaged that each time a service is required, the payment for that service will be made by way of a fresh premium rate call or fresh originating text message, it would be possible to allow several accesses to data for a single premium rate call or text message. For example, a user may be permitted to look up the price of a number of stocks and shares, for the charge made for a single premium rate call or text message. In the case of playing a game, the time allowed for that purpose may be adjusted to suit the cost of the premium rate call or text message.

It will be appreciated that a particular use for the procedures of the present invention is the accessing of music and video tracks, in a compressed format such that those tracks may be down-loaded to an MP3 or other suitable player.

The invention will be described in greater detail by way of certain specific examples, referring to the accompanying drawings. These show authorisation and payment procedures for accessing services on the Internet, arranged in accordance with the present invention. In the drawings:
Figure 1 is a flow chart of the principal steps to be performed by a user in accessing an Internet site for which a charge is to be made optionally using an anonymous mode or a registered mode;
Figure 2 is a diagrammatic explanation of a first verification procedure;
Figure 3 is a diagrammatic explanation of a second, more complex verification procedure;
Figures 4 and 5 are flow charts respectively for the first and second verification procedures as illustrated diagrammatically in Figures 2 and 3;
Figure 6 is a flow chart of the principal steps to be performed by a user in accessing an Internet site for which a charge is to be made optionally using an anonymous mode or a registered mode;
Figure 7 is a diagrammatic explanation of a verification procedure; and
Figure 8 is a flow chart for the verification procedure illustrated diagrammatically in Figure 7.

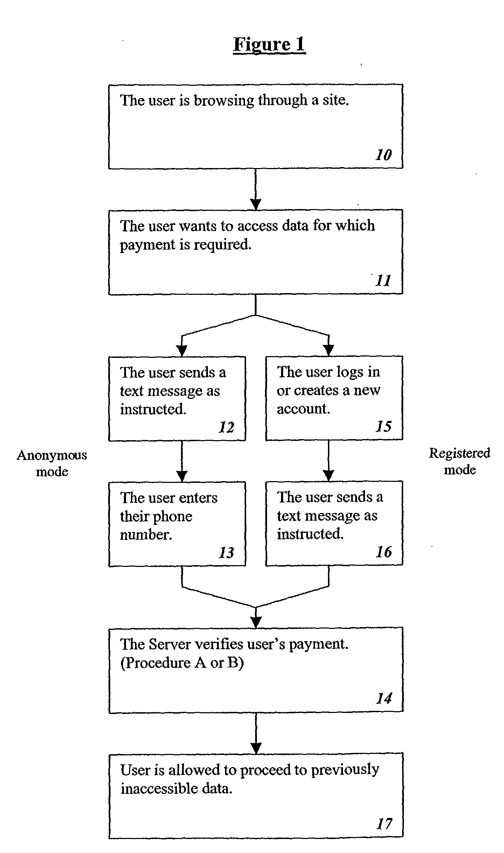

In Figure 1, there is shown an example of the authorising procedure of this invention, as it appears to a user. That user may be browsing through various web sites and come across a site offering a service for which a payment is required, or the user may be aware of a web site offering such a service, for example by way of press advertising. In either case, as shown at 10, the user may arrive at a site where a payment is required if the user wishes to proceed further and access data for which a payment is required, as shown at 11.

From here, the authorisation procedure may follow one of two paths. In the first of these, referred to as the "anonymous mode", the user sends (at 12) a text message on a mobile phone, for example using the so-called short messaging service (SMS) which allows messages of up to 160 characters, following instructions which are conveyed to the user on the web site being accessed, at 11. Then, the user returns to the Internet site and enters the telephone number of the mobile phone used to send the text message, as shown at 13. This could be performed whilst the Internet site accessed at 11 is still available on the Internet device used to access the site, or could be performed subsequently - minutes, hours or even days later. The method then proceeds to step 14, to be described below.

In the alternative procedure, referred to as the "registered mode", the user creates a new account or logs in to an existing account if an account had previously been created. In creating the account, the user has to give certain personal data, including the telephone number of the mobile phone which will subsequently be used to send one or more authorising text messages. Once logged in to the Internet site the user will be given instructions to send a text message, for example using the SMS on a mobile phone, as shown at step 16, whenever access to the controlled service is required.

As will be described below, the telephone number of the mobile phone which is used to send the text message, in step 12 or step 16, is sent to a matching server. That telephone number is then compared in step 14 by the matching server with the telephone number entered in step 13 or entered as a part of the account creation procedure of step 15. Provided a match is found, the user is then given access to the data offered by the Internet site, as shown in step 17.

In the anonymous mode, the user has to enter the appropriate telephone number into a CGI form or text box every session or on every page to be accessed, so that the matching server can verify a corresponding text message has been sent through the text messaging service. By contrast, in the registered mode, the user has to have an account with the Internet content server. That account includes the user's mobile telephone number, which is stored along with other details of the user, such as a user name and password. Thus, the telephone number is known to the content server when the user logs in subsequent to the creation of a new account, and can be supplied to the matching server to verify the messaging service had been used, to make a payment for the service to be provided by the content server.

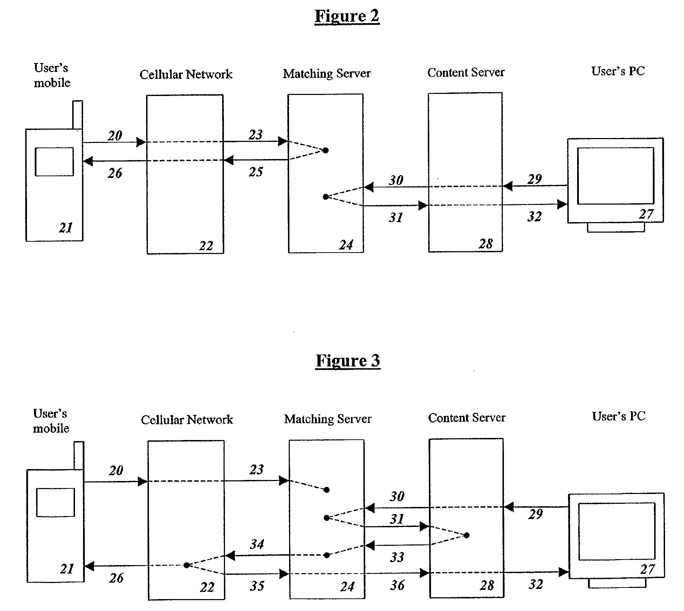

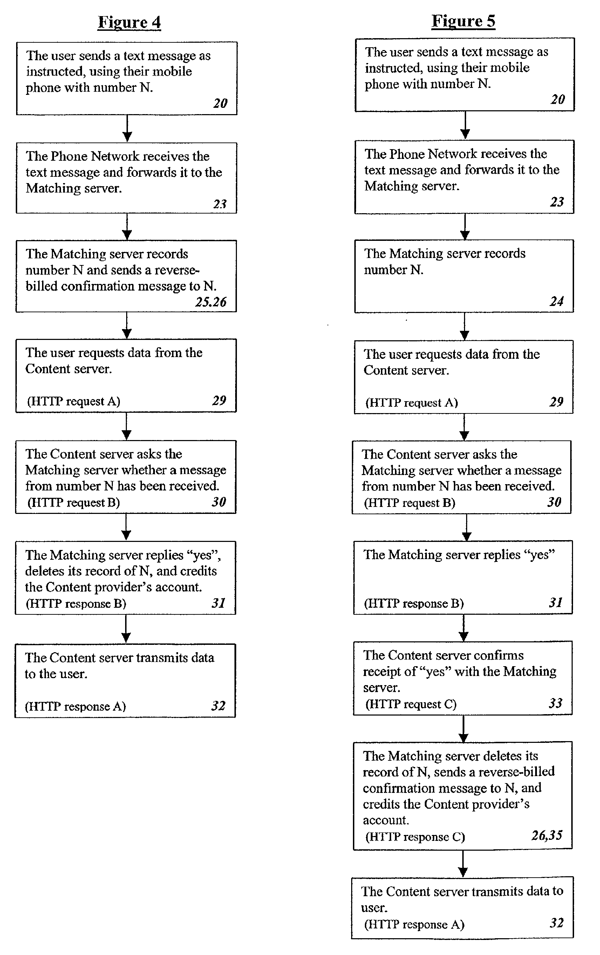

Reference is now made to Figures 2 and 4, illustrating a first, and simpler, verification procedure. In step 12 (of Figure 1) the user sends a text message as shown at 20, using mobile phone 21. That message is received by a cellular network 22 and is routed at 23 to a matching server 24. This could be part of the cellular network 22, or could be part of an Internet content provider's system, as well as being a stand-alone system as shown at 24.

On correctly receiving the text message, the matching server 24 adds the telephone number of the originating mobile phone to a database of such numbers and sends a return message to the cellular network 22, as shown at 25. That message is transmitted back to the mobile phone 21 by the cellular network, as shown at 26. On receiving the message, the mobile phone 21 will display a text message indicating that the originating message has been received and that the Internet service is now available for access. Further, upon the mobile phone 21 receiving the text message 26, the cellular network provider makes a charge against the user's mobile phone account, of considerably more than the conventional charge made for use of the short text messaging service.

By way of example, a typical text message in the United Kingdom may cost 10p to send. The cellular network provider may or may not make a charge when the message is sent at 20, from the mobile phone 21 to a particular number. However, upon the cellular network sending the return message at 26, the network provider may make a charge of at least 20p, but possibly as high as £2 or so for the reverse-billed text message. Of course, agreements may be reached between the cellular network provider and the Internet content provider for even greater amounts to be charged upon transmission and reception of the message, at 26.

Though access to the Internet site could be made through any suitable equipment, for the purpose of the present example it is presumed that a conventional PC 27 is employed. On reaching step 11 (Figure 1) the user is prompted on the PC to enter the telephone number of the mobile phone used to send the text message, as has been described above, if the user is following the anonymous mode. That telephone number is transferred through the Internet content provider's server 28 (the content server) to the matching server 24, as shown by path 29,30. In the matching server, that telephone number is compared with all of those numbers held by the matching server in its database as having sent a text message to the server 24. If a match is found, the number is deleted from those stored in the matching server's database and a suitable signal (HTTP response B) is sent at 31, back to the content server 28. That server signals this fact back to the user's PC 27 (HTTP response A), as shown at 32, and allows the user access to the requested data.

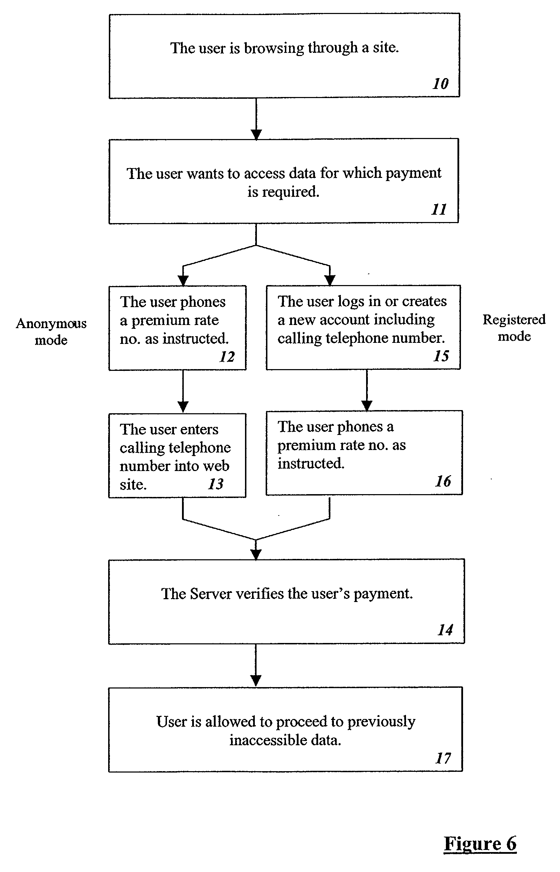

Referring now to Figures 3 and 5, an alternative verification procedure is shown. Insofar as is possible, the same reference numbers are used to indicate the essentially same steps as are employed in the first verification procedure of Figures 2 and 4.

The significant difference with the second verification procedure is that the matching server 24 does not return a text message to the cellular network 22 immediately on receiving a text message from the network; rather, the number is simply stored in the matching server 24. Subsequently, on the matching server 24 receiving a request (at 30) for a number comparison from content server 28, the same HTTP response B is sent back to the content server 28. The content server 28, on receiving that response B, then sends to the matching server 24 a confirmation response at 33. The matching server 24 then sends a text message 34 to the cellular network 22, which message is transmitted to the mobile phone 21 and the record of the originating telephone number is deleted from the database on the matching server. Simultaneously, the cellular network sends a response (at 35) back to the matching server 24 to confirm that the text message has been transmitted to mobile phone 21, that response being passed through the matching server 24 to the content server 28, as shown at 36 (HTTP response C). From there, the procedure is the same as in the first verification procedure, shown in Figure 2, with the return message 32 being sent to the user's PC 27.

The first procedure is the simpler, but the user is sent a reverse-billed text message before the telephone number has been checked and access given to the content server Internet site. If one of the connections is interrupted or broken, or the user has entered his phone number incorrectly, it is possible that the user could be billed for a service which the user is then denied.

The second procedure involves more server-to-server interaction and closer integration with the cellular network. More transaction time would consequently be required, but it allows verification to take place before a user is actually charged for the service and should allow greater flexibility in the tariff structure with which the user is to be charged.

Referring now to the example illustrated in Figures 6 to 8, an alternative authorising procedure is shown, as it appears to a user. That user may be browsing through various web sites and come across a site offering a service for which a payment is required, or the user may be aware of a web site offering such a service, for example by way of press advertising. In either case, as shown at 10, the user may arrive at a site where a payment is required if the user wishes to proceed further and access data for which a payment is required, as shown at 11.

From here, the authorisation procedure may follow one of two paths. In the first of these, referred to as the "anonymous mode", the user calls (at 12) a specified premium rate number from a mobile or land-line telephone having CLI-enabled, following instructions which are conveyed to the user on the web site being accessed, at 11. Then, the user returns to the Internet site and enters the telephone number of the telephone used to make the premium rate call, as shown at 13. This could be performed whilst the Internet site accessed at 11 is still available on the Internet device used to access the site, or could be performed subsequently - minutes, hours or even days later. The method then proceeds to step 14, to be described below.

In the alternative procedure, referred to as the "registered mode", the user creates a new account on the Internet site or logs in to an existing account, if an account had previously been created. In creating the account, the user has to give certain personal data, including the telephone number of the telephone which will subsequently be used to make one or more authorising premium rate calls. Once logged in to the Internet site, the user will be given instructions to make a premium rate call to a specified number, as shown at step 16, whenever access to the controlled service is required. The method then proceeds to step 14.

As will be described below, the telephone number of the telephone used to make the premium rate call, in step 12 or step 16, is sent to a matching server. That telephone number is then compared in step 14 by the matching server with the telephone number entered in step 13 or entered as a part of the account creation procedure of step 15. Provided a match is found, the user is then given access to the data offered by the Internet site, as shown in step 17.

In the anonymous mode, the user has to enter the appropriate telephone number into a CGI form or text box every session or on every page to be accessed, so that the matching server can verify a corresponding premium rate call has been made. By contrast, in the registered mode, the user has to have an account with the Internet content server. That account includes the user's telephone number, which is stored along with other details of the user, such as a user name and password. Thus, the telephone number is known to the content server when the user logs in subsequent to the creation of a new account, and can be supplied to the matching server to verify the messaging service had been used, to make a payment for the service to be provided by the content server.

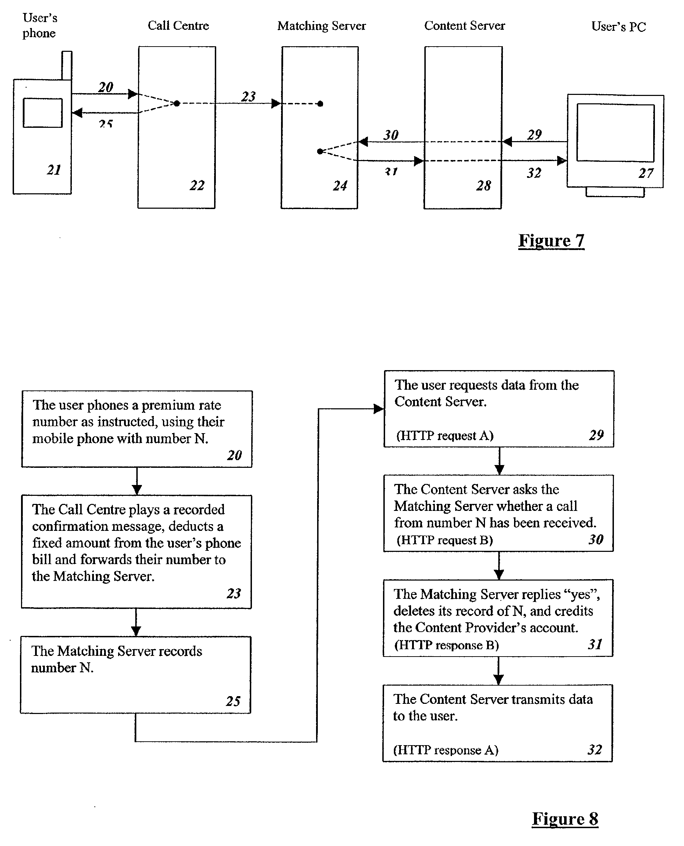

Reference is now made to Figure 7 and 8, illustrating a simple verification procedure. In step 12 (of Figure 6) the user makes a premium rate call as shown at 20, in this case using mobile telephone 21. That call is processed by a call centre 22 of a cellular network which plays a pre-recorded message to the caller, debits the caller's account with the appropriate charge for the premium rate call, and routes at 23 to a matching server 24 the telephone number of the telephone making the premium rate call. On receiving the telephone number from which the premium rate call was made, the matching server 24 adds that number to a database of such numbers.

By way of example, in the United Kingdom premium rate calls are all prefixed 09. A call to such a number may cost from £0.25 per minute up to £2.00 per minute, or incur a single fixed charge of £0.25 to £2.50 - a so-called "drop charge". Any of these regimes may be used, or indeed any other depending upon agreements reached between the network service provider and the Internet content provider, subject to national (or governmental) regulations. The revenue generated by such premium rate calls is then shared between the network service provider and the Internet content provider, in pre-set proportions which may depend upon the charging regime used.

Though access to the Internet site could be made through any suitable equipment, for the purpose of the present example it is presumed that a conventional PC 27 is employed. On reaching step 11 (Figure 6) the user is prompted on the PC to enter the telephone number of the telephone used to make the premium rate call, as has been described above, if the user is following the anonymous mode. That telephone number is transferred through the Internet content provider's server 28 (the content server) to the matching server 24, as shown by path 29,30. In the matching server, that telephone number is compared with all of those numbers held by the matching server in its database as having made a successful premium rate call. If a match is found, the number is deleted from those stored in the matching server's database and a suitable signal (HTTP response B) is sent at 31, back to the content server 28. That server signals this fact back to the user's PC 27 (HTTP response A), as shown at 32, and allows the user access to the requested data.

The procedure described above is simple to implement with the surety that a charge will be collected for access to the Internet content. If there is any kind of bar on premium rate calls, for example pre-set by an account holder, or if the network service provider will not allow it due to uncertainty over its ability to collect payment, the telephone number is not transferred to the matching server. Thus, the matching server will simply indicate to the content server that access to the valuable content is to be denied.

It will be appreciated that the example described above particularly lends itself to the provision of data through an Internet site when only a relatively low charge is to be made for that data and so when the use of a credit card would be uneconomic. Examples of such data include, but are not limited to, weather forecasts, game-playing sites, music tracks, video tracks, the prices of stocks and shares - and many other uses will be apparent to those skilled in the art.

## Claims

1. An authorising procedure for accessing an Internet-based controlled service, which procedure comprises:
- using a CLI-enabled telephone having an account with a telephone network service provider, to call a specified destination at which a responder to said call retrieves the calling number and passes that calling number to a matching server;
- recording on the matching server each calling number passed thereto by the responder;
- accessing an Internet site provided on a content server and which offers said Internet-based controlled service;
- submitting to the content server the telephone number of the CLI-enabled telephone used to make said call to the specified destination;
- forwarding the submitted telephone number to the matching server for comparison with all calling numbers recorded on the matching server; and
- allowing or refusing access to the Internet-based service depending upon the result of the comparison.

2. An authorising procedure for accessing an Internet-based controlled service, which procedure comprises:
- accessing an Internet site provided on a content server and which offers said Internet-based controlled service;
- submitting to the content server the telephone number of a CLI-enabled telephone having an account with a telephone network service provider which will be used to make a call to a specified destination at which a responder to said call retrieves the calling number;
- forwarding the submitted telephone number to a matching server;
- obtaining from the content server instructions for making said call to the specified destination;
- using the CLI-enabled telephone to call the specified destination in accordance with the obtained instructions;
- passing the telephone number retrieved by the responder to the matching server;
- using the matching server to compare recorded submitted telephone numbers with telephone numbers passed thereto by the responder; and
- allowing or refusing access to the Internet-based service depending upon the result of the comparison.

3. An authorising procedure as claimed in claim 1 or claim 2, wherein a mobile telephone is used to make said call to the specified destination, said call being in the form of an originating text message to a text messaging service.

4. An authorising procedure as claimed in claim 3, wherein the messaging service passes the originating text message to the responder which retrieves the calling number associated with the text message and passes the calling number to the matching server, the responder then generating and forwarding to the messaging service a return text message for onward transmission to the mobile telephone.

5. An authorising procedure as claimed in claim 1 or claim 2, wherein the CLI-enabled telephone is used to make a voice call to the specified destination, the responder at the specified destination retrieving the calling number and then producing a voice message to indicate the calling number has been passed to the matching server for recording thereat.

6. An authorising procedure as claimed in any of the preceding claims, wherein a list of approved numbers is stored on the content server and the content server compares a submitted telephone number with the numbers in said list, the content server rejecting the number if it is not in said list.

7. A method as claimed in any of the preceding claims, wherein the content server requires the calling number to be submitted to the content server each time access to the controlled service is required, which submitted number is forwarded to the matching server to force a comparison with the telephone numbers passed to the matching server by the responder, before access to the controlled service is permitted.

8. A method as claimed in any of claims 1 to 6, wherein the calling number is submitted to the content server for storage on the content server, whereby that calling number is recalled from the content server when a comparison is to be made.

9. A method as claimed in claim 8, wherein the calling number is stored on the content server in association with a user name and password, whereby a user enters his user name and password to cause the content server to retrieve the user's stored calling number and then to forward that number to the matching server.

10. A method as claimed in any of the preceding claims, wherein the responder requires the entry of a password on the calling telephone, and the responder then passes both the retrieved calling number and the password to the matching server; and the user submits to the content server both the calling number and the password which calling number and password are then forwarded to the matching server for comparison with all the calling numbers and associated passwords passed thereto by the responder.

11. A method as claimed in any of the preceding claims, wherein the matching server deletes a recorded calling number from those recorded thereon when a positive match is made in the comparison step.

12. A method as claimed in any of the preceding claims, wherein said call is made to a specified premium rate destination for which an elevated charge is made; and the telephone network service provider debits the account with a pre-set elevated charge either on connecting the call or on completion of a subsequent step in the authorising procedure.

13. A method as claimed in claim 12 and in which the matching server generates a return message to indicate the calling number has been recorded, wherein the return message is passed to the network service provider for onward transmission to the calling telephone and an elevated charge is made for returning the message.

14. A method as claimed in claim 13 and in which the telephone account with the network service provider is a pre-paid mobile telephone account, wherein the network service provider deducts a pre-set number of units from the pre-paid account upon the return message being received by the mobile telephone.

15. A method as claimed in claim 13 and in which the telephone account with the network service provider is a mobile telephone credit account, wherein the network service provider adds a pre-set charge to the credit account upon the return message being received by the mobile phone.

16. A method as claimed in claim 13 and in which the CLI-enabled telephone has a credit account with a network service provider, wherein the telephone is used to make the call to a specified premium rate service number, and the network service provider adds a pre-set charge to the credit account upon connection of that call.

17. A method as claimed in claim 16, wherein a single drop-charge is made by the network service provider, when the call to the premium rate service number is made.

18. A method as claimed in claim 16 or claim 17, wherein the charge for the call to the premium rate service number is made only after the expiry of a pre-set time lapse following connection of the call to the premium rate service number, and disconnection of said call before the expiry of said pre-set time lapse prevents a charge for the premium rate service being incurred.

19. A method as claimed in any of the preceding claims, wherein the content server permits one of
(a) a pre-determined period of access to the controlled service,
(b) a single step to be performed on the controlled service, and
(c) a pre-determined number of steps to be performed on the controlled service
for each successful comparison obtained by the matching server.

20. A method as claimed in any of the preceding claims, wherein the permitted access comprises at least one of the downloading of digital data files, the playing of games, the viewing of commercial information, and the viewing of privileged information.

21. Apparatus for authorising access to an Internet-based service, comprising a computer installation running a premium rate service arranged to receive calls to a specified number and make an elevated charge to an account holder for a calling telephone; a matching server arranged to receive from said computer installation the telephone number of the calling telephone to the specified premium rate service number, the matching server storing that calling telephone number in a database; and an Internet service content server to which access may be gained through the Internet and limiting access to data available from the server, the content server prompting for the entry of a telephone number and then passing an entered telephone number to the matching server for comparison with the telephone numbers stored in the matching server database, whereafter the matching server notifies the content server of the result of the comparison and the content server permits or denies access to said data dependent thereon.
